# EUROPEAN PATENT SPECIFICATION

(11) **EP 1 364 830 B1**
(45) Date of publication and mention of the grant of the patent: **14.03.2007**
(21) Application number: 03253086.7
(22) Date of filing: 16.05.2003
(51) Int. Cl.: B60P 3/12

(54) **A stowable recovery trailer**
Verstaubarer Abschleppanhänger
Chariot de dépannage escamotable

(30) Priority: 17.05.2002 GB 0211386
(43) Date of publication of application: 26.11.2003
(73) Proprietor: Stadco Limited, Shrewsbury Shropshire SY1 3AS (GB)
(72) Inventor: Scholes, Alan, Leamington Spa, Warwickshire CV32 6HG (GB)
(74) Representative: Chettle, Adrian John

(56) References cited:
- EP-A- 0 699 558
- DE-A- 4 011 620
- US-A- 4 534 579

## Description

The invention relates to an apparatus comprising a stowable recovery trailer according to the preamble of claim 1 and is particularly, but not exclusively, intended for use in the recovery of a broken down motor vehicle. An apparatus of this kind is known DE 4011620. Additionally, the invention relates to a method of stowing and deploying such a trailer from a repair vehicle according to claim 17.

Broken down vehicles can often be repaired at the roadside and motoring organisations employ qualified vehicle technicians who specialise in making roadside repairs. In certain instances, however, it is not possible to make a satisfactory roadside repair and the vehicle has to be moved to another location, for example to a specialised dealership. That invariably requires the use of a purpose built recovery vehicle different from the normal repair vans used by technicians of the motoring organisation.

It would be helpful if the repair vehicle itself could tow a broken down vehicle away when a repair cannot be carried out at the roadside to save having to wait for a recovery vehicle to arrive at the scene. In that respect, attempts have been made to adapt repair vehicles to house a recovery trailer which can be stowed in the van when not in use and deployed from the rear of the van when required. Examples of such adapted repair vans are described in GB-A-2 358 164 and EP-A-0 699 558.

To the best of our knowledge, the adapted repair vans in GB-A-2 358 164 and EP-A-0 699 558 have not been used on a wide scale, possibly due in part to the way in which both require the trailer to be dragged into and out of the back of van for stowage and deployment. An object of the present invention is to provide a recovery trailer which has an improved manner of stowage and deployment.

DE-A-4011620 discloses a van having a rigid recovery trailer stowed inside, and movable via a rear door to the outside, to a deployed condition.

According to the invention there is provided apparatus comprising a recovery trailer adapted to be supported in a stowed position in a repair vehicle and to be positioned outside the vehicle in a deployed condition, characterized in that said apparatus further comprises a pivotable arm arranged to move about its pivot in use to position said trailer outside the vehicle.

The invention also provides a method of stowing and deploying a recovery trailer in and from a repair vehicle, the method comprising providing a pivotable arm in the repair vehicle for supporting the trailer inside the vehicle in a stowed position and moving the arm about its pivot to position the trailer outside the repair vehicle to enable the trailer to be deployed.

The use of a pivotable arm enables the trailer to be deployed and then stowed in a more straightforward manner than that described in GB-A-2 358 164 and EP-A-0 699 558.

Thus is provided a repair vehicle which includes a stowable recovery trailer and a pivotable arm for supporting the trailer in a stowed position in the repair vehicle, the pivotable arm being arranged to move about its pivot to position the trailer outside the repair vehicle to enable the trailer to be deployed.

Means may be provided to allow the trailer to be lowered relative to the arm into its fully deployed position.

A winch, preferably a powered winch, may be provided which is arranged to wind or unwind a cable or the like, the cable preferably being arranged so as to pass over the pivotable arm for attachment to the trailer. The winch preferably comprises the aforesaid means which allows the trailer to be lowered relative to the arm into its deployed position. When it is desired to stow the trailer in the repair vehicle after deployment, the winch may be operated to lift the trailer relative to the pivotable arm.

The pivotable arm may be moved by a suitable actuator about its pivot.

A releasable retaining device may be provided on the pivotable arm for securing the trailer to the arm. The retaining device is preferably arranged to release the trailer at a point in the deployment procedure to enable the trailer to be lowered from the pivotable arm to its fully deployed position.

The trailer may have a tow hitch by means of which the trailer can be detachably hitched to a towing point on the vehicle. Preferably, an alignment means is provided for aligning the tow hitch with the towing point as the trailer moves to its deployed position. The alignment means may comprise an alignment member on the trailer and a co-operable member on the repair vehicle, alignment being achieved by locating the alignment member and co-operable member one within the other prior to attaching the towing hitch to the towing point.

Preferably, the alignment member and the co-operable member cease to co-operate when the towing hitch is attached to the towing point.

The alignment member may comprise a ring-like member.

The co-operable member may define a recess for receiving the alignment member. When the towing hitch is attached to the towing point, the alignment member is preferably arranged to lift at least partially out of the recess.

Preferably, a holding means is provided for holding the trailer in a position in which the said alignment member on the trailer and the co-operable member will tend to locate one within the other as the trailer is moved out of the repair vehicle towards its deployed position. The said holding means, which is preferably on the pivotable arm, may comprise two holding members such as straps which extend from the arm. The holding members preferably extend from spaced apart positions to positions adjacent each other on the trailer. The holding means and the aforesaid cable or the like preferably serve to hold the trailer in the position in which the said alignment member on the trailer and the co-operable member will tend to locate one within the other as the trailer is moved towards its deployed position.

The trailer may have wheels mounted for movement between folded and unfolded positions on the trailer. When the wheels are in the folded position the trailer can be moved to its stowed position and when in the unfolded position the trailer can be towed by the recovery vehicle. The wheels may be mounted for pivoting movement between the folded and unfolded positions. In such a case, axes of pivoting of the wheels are preferably transverse to the axis of pivoting of the pivotable arm. Preferably, the wheels are movable between the folded and unfolded positions when the trailer is in a position intermediate to its stowed and deployed positions.

Actuator means may be provided for folding and unfolding the wheels. A separate actuator may be provided for each wheel. Preferably, the or each actuator is an electrical actuator such as an electric ball screw actuator.

Movement of the wheels between the folded and unfolded positions preferably takes place in a common plane. Preferably the plane in which folding and unfolding takes place is transverse to a plane in which the trailer travels when moving between its stowed and deployed positions.

The wheels may be mounted for self steering. In that way, tyre scrub is minimised particularly on tight radius bends when the track of the trailer requires different steering angles at each wheel. If desired, means may be provided for locking the wheels in a straight ahead position for, say, reversing. The trailer may have a wheel geometry which provides castor and/or self aligning torque to allow for correct tracking of the trailer during normal forward towing with a recovered vehicle in place and to provide stability during braking.

The wheels may be mounted for folding on ends of a beam attached to a towing bar, the towing bar extending in the direction of travel of the trailer and the beam being transverse of the towing bar. The towing bar may be articulated to enable it to fold for ease of stowing in the vehicle.

Preferably, locking means is provided for locking the towing bar in its folded condition when the trailer is in its stowed position in the repair vehicle and/or when moving the trailer between its stowed and deployed positions.

An electronic control system may be provided for moving the trailer between its stowed and deployed positions. The control system may be operated manually or operated automatically by means of a personal computer or microprocessor based controller.

The trailer preferably includes a pair of wheel trays for receiving wheels of a vehicle to be recovered by the trailer. A winch (which may be the winch referred to above) can be used to pull the vehicle towards the trailer until the wheels are positioned on the wheel trays. Ramps may be provided to lead the wheels into the wheel trays. Instead of using a pair of wheel trays, a single tray may be provided centrally of the trailer to enable the trailer to carry a motorcycle. Retaining means may be provided for holding the wheels of the recovered vehicle on the wheel trays. The retaining means may include a retainer on each wheel tray which can moved between retaining and non-retaining positions.
A stowable recovery trailer in accordance with the invention will now be described by way of example with reference to the accompanying drawings in which:
Fig 1 is a rear view of a repair vehicle with rear doors open and showing a recovery trailer stowed in the vehicle,
Fig 2 is an elevation of the trailer stowed in the repair vehicle,
Fig 3 is a view similar to Fig 2 showing the trailer in a position between its fully stowed position and its fully deployed position,
Fig 4 is a perspective view to a larger scale of a tow hitch of the trailer showing an alignment member on the trailer and co-operable members on the repair vehicle,
Fig 5 is an elevation to a larger scale of the upper end of a pivotal arm used to move the trailer into and out of the repair vehicle,
Fig 6 is an elevation showing the trailer in its fully deployed condition,
Fig 7 is a plan view of the deployed trailer shown in Fig 6,
Fig 8 is a perspective view from one side to a larger scale showing a connection between parts of a towing bar of trailer,
Fig 9 is a view similar to Fig 1 but with the trailer fully deployed,
Fig 10 is a perspective view from one side showing a wheel tray of the trailer and
Fig 11 is a perspective view of the wheel tray of Fig 10 from the rear.

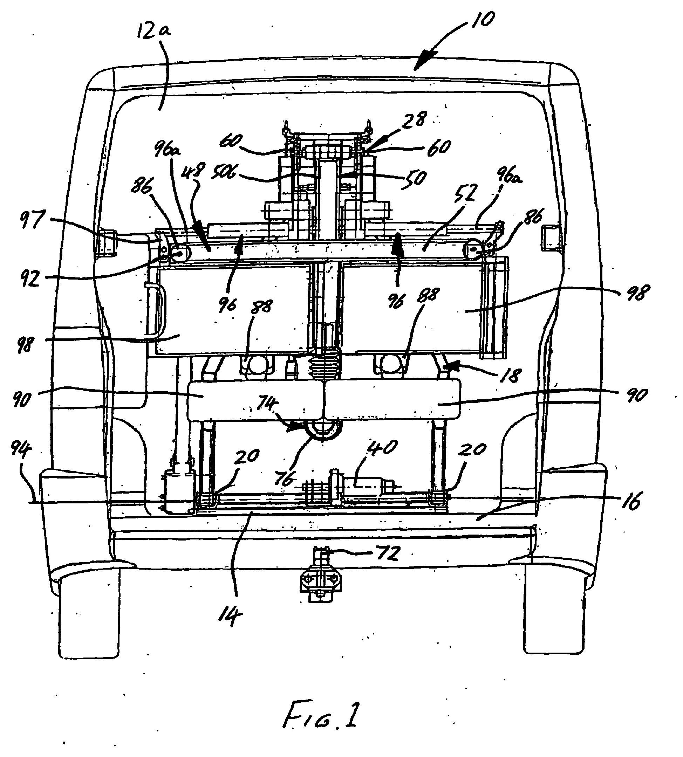

Referring to Fig 1, a repair vehicle 10 comprises a van having a tool carrying compartment 12 which is normally accessible through a side door (not shown) and rear doors (also not shown).

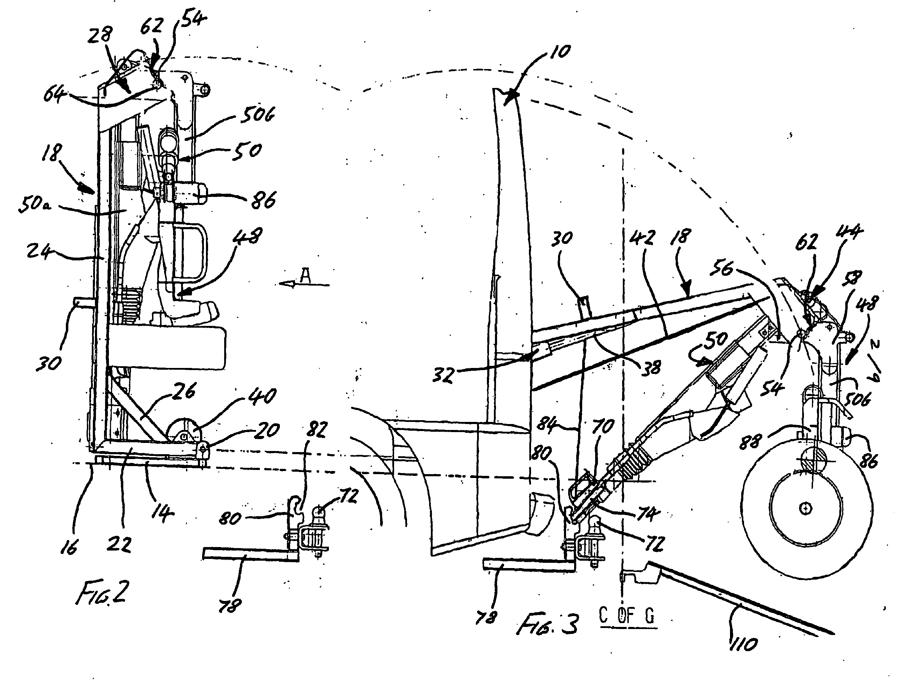

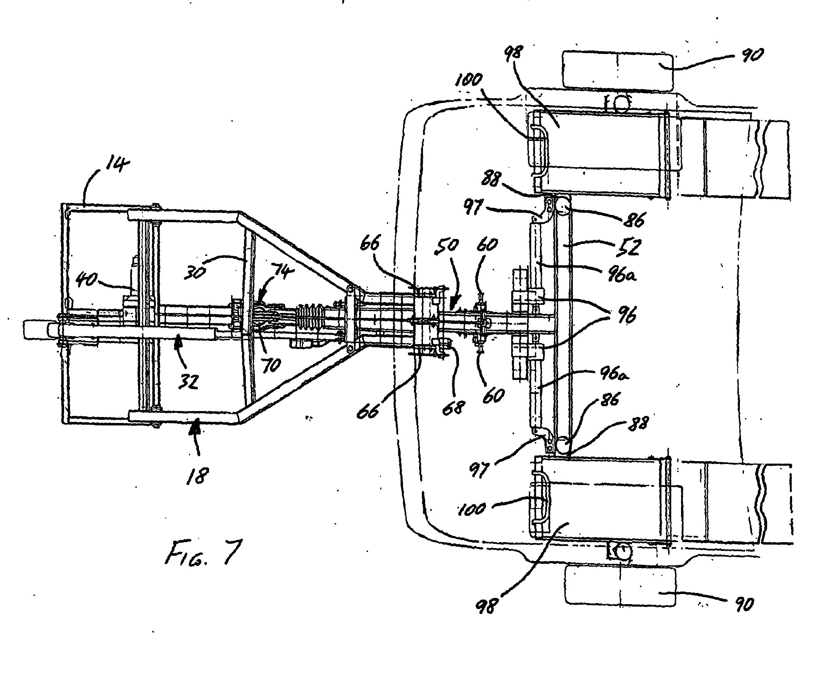

In accordance with the present invention, a frame 14 is attached to a floor 16 of the tool carrying compartment 12. An arm 18 is pivotally connected to brackets 20 on the frame 14. The arm 18 (which in the present example constitutes the aforesaid pivotable arm) is substantially L-shaped in side view as can be seen in Fig 2. The arm 18 has horizontal limbs 22 having ends which locate in the brackets 20 and opposite ends attached to upstanding limbs 24. The limbs 22 are braced to the limbs 24 by members 26. The upstanding limbs 24 together form a substantial A-shape as can be seen in Fig 7 and converge at their upper ends to support pulley block 28. A cross-member 30 extends between the limbs 24.

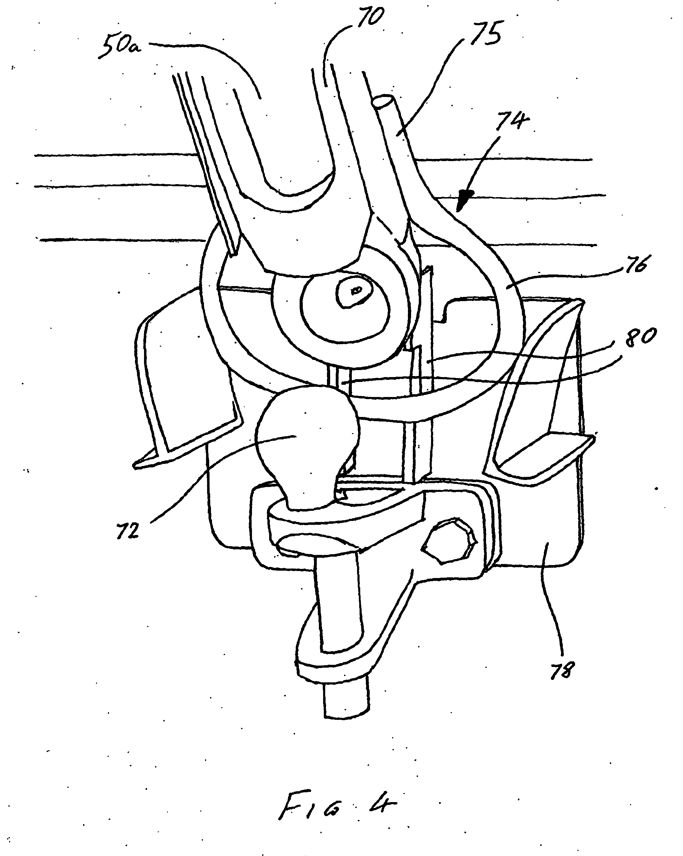

As shown in Fig 2 but particularly in Fig 6, an electro ball screw actuator 32 has a cylinder 34 and is pivotally mounted between a pair of upstanding brackets 36 on the frame 14, and has a piston rod 38 pivotally connected to the upper end of the arm 18. It will be noted that the cross-member 30 is ridge shaped so as to clear the actuator 32. Extension and retraction of the piston rod 38 causes the arm 18 to move about its pivots in brackets 20 as shown, for example, in Fig 3.

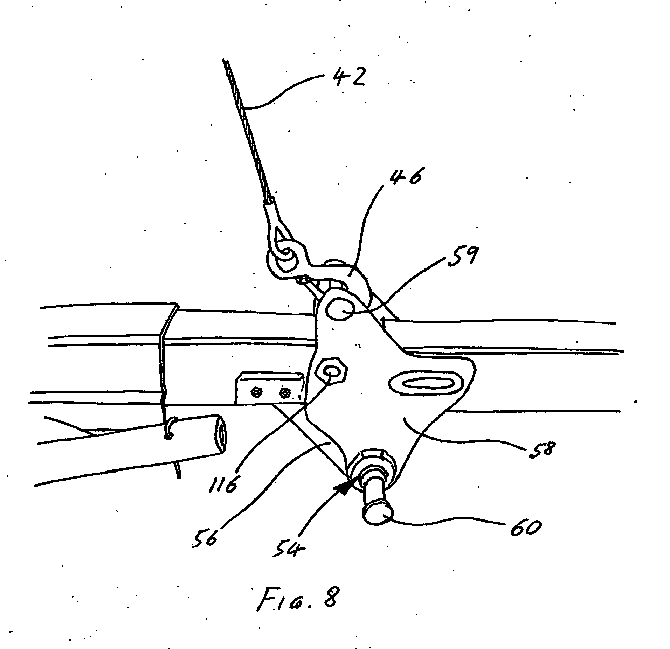

A winch 40 is mounted on the frame 14 and a cable 42 from the winch 40 passes over a pulley arrangement 44 on the pulley block 28 and terminates at a hook 46 which can be seen in Figs 6 and 8.

As shown in Figs 1, 2 and 3, the arm 18 supports a stowable recovery trailer indicated generally at 48. The recovery trailer 48 basically comprises a towing bar 50 which is rigidly attached to a transverse beam 52. The towing bar 50 comprises fore and aft sections 50a and 50b respectively which are connected together by a pivot pin 54. The pivot pin 54 passes through inner side plates 56 on the section 50a of the towing bar and through outer side plates 58 on the on the section 50b, the inner side plates 56 being positioned inboard of the outer side plates 58. The pivot pin 54 extends beyond both sides of the outer side plates 58 to form retaining projections 60 (see Fig 1) and, in the position of the arm 18 shown in Figs 1 to 3, the retaining projections 60 locate in a releasable retaining device 62 on the pulley block 28. The releasable retaining device 62 comprises two recesses 64 in respective side plates 66 (see Figs 2 and 7) of the pulley block 28 and a claw arrangement (not shown) which is operated by an electrically operable actuator 68 (again see Fig 7) to retain the projections 60 in or release them from the recesses 64. A lifting pin 59 (see Fig 6) extends between the outer side plates 58 and is normally engaged by the hook 46.

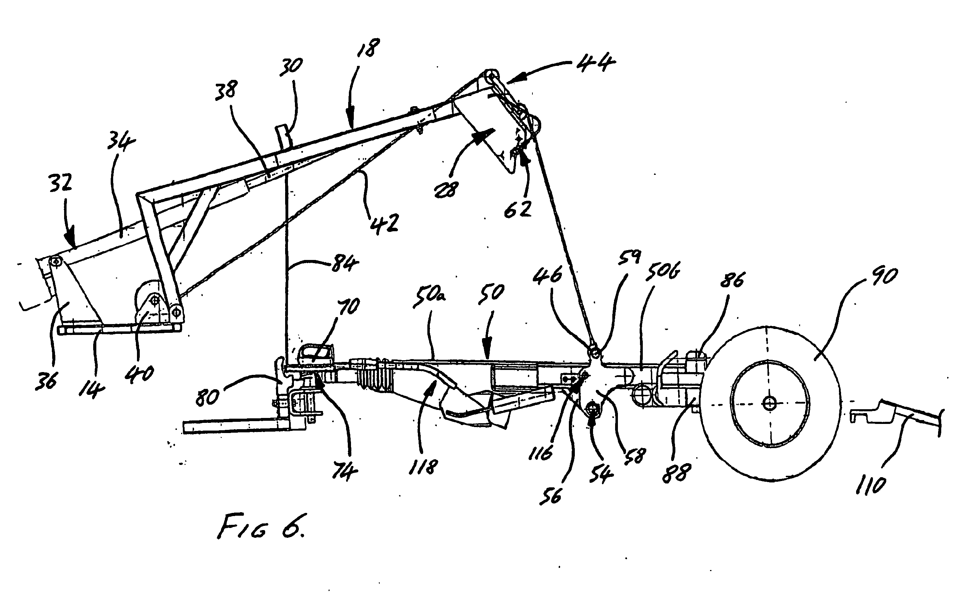

Fig 5 illustrates a modified form of pulley block 28 showing the recesses 64 in side plates 66 openable or closeable by means of respective pins 69 (one only of which is shown) by operation of the actuator 68.

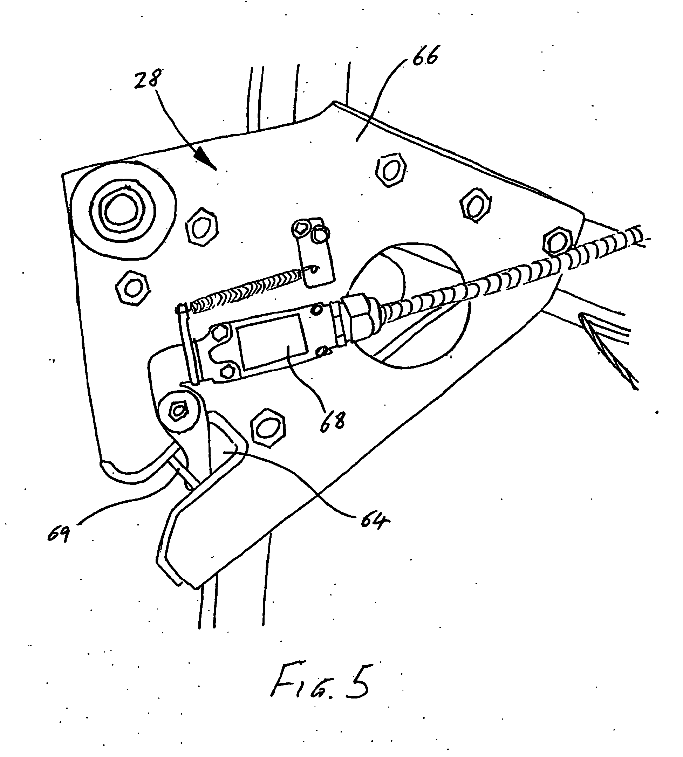

The front of the fore section 50a of the towing bar 50a has a tow hitch 70 thereon by means of which the trailer 48 can be attached to a tow ball 72 on the repair vehicle 10. As shown particularly well in Fig 4, the fore section 50 carries an alignment member 74 in the form of a rigid rod 74 which is bent into a keyhole shape having side arms 75 secured to both sides of the section 50a adjacent the tow hitch 70 and a ring-like alignment section 76 which extends around the front of the tow hitch.

The tow ball 72 is mounted on a tow bar 78 secured to the repair vehicle 10 and the tow bar 78 also carries a pair of members 80 which are co-operable with the alignment section 76. Each member 80 comprises a metal plate which is formed with a recess 82 (see Fig 2) for receiving the ring-like alignment section 76 during movement of the trailer 48 into its deployed position as described below.

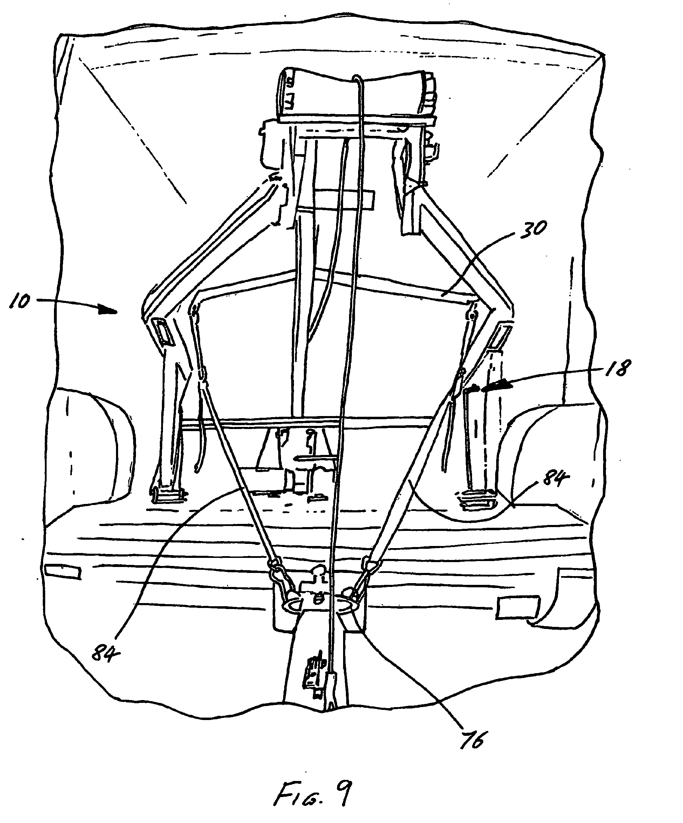

As shown in Figs 3, 6 and 9, two straps 84 are attached at upper ends to the cross member 30 and at their lower ends to the ring-like alignment section 76.

The transverse beam 52 carries pivots 86 at its outer ends by means of which mountings 88 for wheels 90 are connected to the beam 52. The pivots 86 define axes of pivoting 92 (see Fig 1) which are transverse to an axis of pivoting 94 about which the arm 18 pivots. The beam 52 carries two electrically operable actuators 96 can be retracted to pivot the wheels 90 from the folded position shown in Fig 1 to an unfolded position shown in Figs 6, 7 and 10. The actuators 96 have operating rods 96a which are connected to the wheel mountings 88 by means of brackets 97. The folding and unfolding takes place in a common plane.

Each wheel mounting 88 supports its wheel 90 at an angle to provide appropriate castor and camber for self steering and correct tracking of the trailer when a vehicle is being towed and to provide stability during braking. A suitable locking arrangement (not shown) may be provided for locking the wheels 90 in a straight ahead position for reversing.

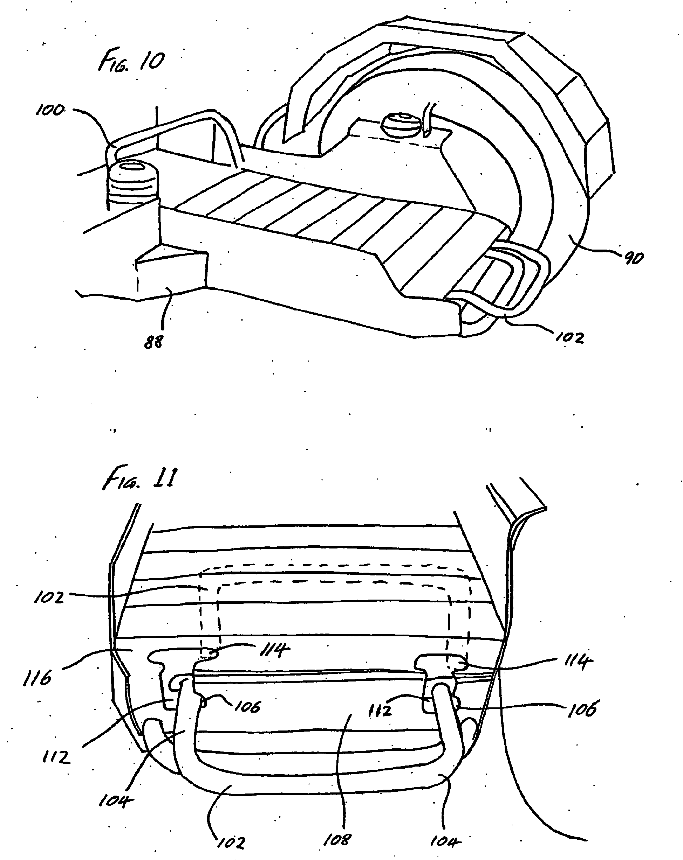

To enable front wheels of a vehicle to be mounted on the trailer 48, wheel trays 98 are suitably attached each wheel mounting 88. As shown in Figs 10 and 11, each wheel tray 98 has front retainers 100 and pivotable rear retainers 102 respectively for retaining the vehicle wheels in place on the trays 98 when the vehicle is being towed. To enable the vehicle front wheels to be moved on to the trays 98, the rear retainers 102 will be positioned as shown in full lines in Figs 10 and 11. In that position, side members 104 of each rear retainer are urged by a spring (not shown) beneath the wheel tray into respective slots 106 in a vertical rear surface 108 of its wheel tray 98. Portable ramps 110 (see Figs 3, 6 and 7) may be used to assist in moving the front wheels on to the wheel trays 98. Once the vehicle wheels are in position, the side members 104 of each rear retainer 102 can be moved manually out of the slots 106 by urging the rear retainer against the bias of the associated spring. Each rear retainer 102 can then be swung into the vertical broken line position in Fig 11 through connecting slots 112 and the side members allowed to move under the influence of the spring into slots 114 in a horizontal surface 116 of its wheel tray 98. In that way, the wheels of the vehicle will be retained securely on the wheel trays 98.

The various actuators and the winch 40 may be controlled by means of a central control system such as a p.c. or microprocessor based controller. Conveniently, the central control system may operated by a vehicle repair technician using a hand held controller.

The manner in which the trailer can be deployed and then moved back into a stowed position will now be described.

Initially the repair vehicle 10 is parked a short distance in front of the vehicle to be recovered and the rear doors of the repair vehicle are then opened to reveal the trailer 48 as shown in Fig 1. Using the hand held controller, the technician causes the electro ball screw actuator 32 to extend so as to pivot the arm 18 rearwards as shown in Fig 3. The weight of the trailer 48 is carried by the arm 18 and the fore and aft sections 50a, 50b of the towing bar 50 hang on the retaining projections 60 which are held in the recess 64. It will be noted that the fore section 50a is supported by the straps 84 in such way that in the Figs 3 and 4 positions, the ring-like alignment section 76 locates automatically in the recesses 82 of the co-operable members 80. That feature is very useful as the hitch 70 is thereby automatically aligned with the tow ball 72.

Once the alignment section 76 has located in the recesses 82, the control system is designed to cease operation requiring the technician to operate the hand held controller again before the deployment can move on to the next stage. That cessation acts as a reminder to the technician to check the area in which operation is taking place in order to ensure that it is clear of objects that could interfere with deployment.

The controller is then operated again by the technician and causes the actuators 96 to unfold the wheels 90 until they reach the fully unfolded positions shown in Fig 7.

Further operation of the controller then causes the winch 40 to tension the cable 42 ready to take the weight of the trailer 48. Once that has taken place, the controller causes the actuator 68 to release the claws or the pins 59 or 69 to allow the retaining projections 60 to leave the recesses 64 in the pulley block 28. The winch 40 then operates to lower the trailer 48 from the arm 18, the cable 42 passing over the pulley arrangement 44.

Continued operation of the winch 40 lowers the trailer 48 further until the trailer reaches the position shown in Fig 6 with the hitch 70 resting on the tow ball 72. In fact, the hitch 70 makes contact with the tow ball 72 before the trailer 48 reaches the Fig 6 position and continued lowering of the trailer 48 causes the alignment section 76 to lift out of the recesses 82. Once the trailer reaches the Fig 6 position, the technician attaches the hitch 70 to the tow ball 72. In that position, the alignment section 76 is still clear of the recesses 82. Such clearance accommodates pitching movement of the trailer about the tow ball 72. In the Fig 6 position, a locking pin (not shown) is inserted through locking apertures 116 in the outer side plates 58 on the aft section 50b of the towing bar 50 and through locking apertures (not shown) in the fore section 50a. The locking pin prevents unwanted articulation of the towing bar 50.

With the trailer 48 in the Fig 6 position, the hook 46 can be detached from the lifting pin 59 and attached to a towing point on the vehicle to be recovered. The winch 40 is then operated to draw the vehicle towards the trailer so that the wheels of the vehicle can be moved on to the wheel trays 98 as described above. The hook 46 can then be detached from the vehicle and the rear retainers 102 moved to the broken line positions shown in Fig 11.

After making final checks, the repair technician can then tow the vehicle to an appropriate destination using the repair vehicle and deployed trailer.

A technician trained to use to the invention should be able to deploy the trailer in less than three minutes which is very desirable when working at the roadside.

Once the destination has been reached and the recovered vehicle removed from the trailer 48 the trailer can then be moved back into its stowed position in the vehicle. The stowing procedure is opposite to the deployment procedure.

As a safety feature, a known type of brake arrangement is provided for the trailer including a mechanism 118 (see Fig 6) of known kind used together with a cable (not shown) attached to the repair vehicle 10. Should the trailer 48 become accidentally detached from the repair vehicle 10 when being towed, the mechanism 118 will automatically cause brakes on the trailer to be applied.

## Claims

1. Apparatus comprising a recovery trailer (48) adapted to be supported in a stowed position in a repair vehicle (10) and to be positioned outside the vehicle (10) in a deployed condition, **characterized in that** said apparatus further comprises a pivotable arm (18) arranged to move about its pivot in use to position said trailer (48) outside the vehicle (10).

2. Apparatus according to claim 1, wherein an alignment means (76,80) is provided for aligning a tow hitch (70) of the trailer with a towing point (72) of the vehicle as the trailer moves to its deployed position.

3. Apparatus according to claim 2, wherein the alignment means comprises an alignment member (76) on the trailer and a co-operable member (82) on the vehicle, in use, alignment being achieved by locating the alignment member (76) and co-operable member (82) one within the other prior to attaching the tow hitch (70) to the towing point (72).

4. Apparatus according to claim 3, wherein the alignment member (76) comprises a ring-like member.

5. Apparatus according to claim 3 or claim 4, wherein a holding means (84) is provided for holding the trailer in a position in which the said alignment member (76) on the trailer and the co-operable member (82) will tend to locate one within the other as the trailer (48) is moved out of the repair vehicle towards its deployed position.

6. Apparatus according to any preceding claim, and further comprising wheels (90) which are mounted for movement between folded and unfolded positions on the trailer (48), wherein when the wheels (90) are in the folded position the trailer (48) can be moved to its stowed position and when in the unfolded position the trailer (48) can be towed by the recovery vehicle.

7. Apparatus according to claim 6, wherein the wheels (90) are mounted for pivotable movement between the folded and unfolded positions.

8. Apparatus according to claim 7, wherein the axes of pivotable movement of the wheels (90) are transverse to the axis of pivoting of the pivotable arm (18).

9. Apparatus according to any of claims 6-8, wherein the wheels (90) are movable between the folded and unfolded positions when the trailer (48) is in a position intermediate the stowed and deployed positions.

10. Apparatus according to any of claims 6-9, wherein actuator means (96) are provided for folding and unfolding the wheels (90).

11. Apparatus according to any of claims 6-10, wherein a separate actuator (96) is provided for each wheel (90).

12. Apparatus according to any of claims 6-11, wherein the wheels (90) are mounted for self steering.

13. Apparatus according to any of claims 6-12, wherein the wheels (90) are mounted for folding on ends of a beam (52) attached to a towing bar (50), the towing bar (50) extending in the direction of travel of the trailer and the beam (52) being transverse of the towing bar (50).

14. Apparatus according to any preceding claim, wherein an electronic control system is provided for moving the trailer (48) between its stowed and deployed positions.

15. Apparatus according to claim 14, wherein the control system (48) is a microprocessor based controller and is operable via one of manually and automatically.

16. Apparatus according to any preceding claim, wherein a tray is provided centrally of the trailer to enable the trailer (48) to carry a motorcycle to be recovered, in use.

17. A method of stowing and deploying a recovery trailer in and from a repair vehicle, the method comprising the steps of;
providing a pivotable arm (18) in the repair vehicle (10) for supporting the trailer (48) inside the vehicle in a stowed position; and
moving the arm (18) about its pivot to position the trailer (48) outside the repair vehicle to enable the trailer to be deployed.

18. A method according to claim 17 and further comprising the step of;
providing an alignment member (76) on the trailer and a co-operable member (82) on the repair vehicle, in use; and
aligning the repair vehicle (10) and the trailer (48) by locating the alignment member (76) and co-operable member (82) one within the other prior to attaching a tow hitch (70) of the trailer to a towing point (72) of the vehicle.

## Patentansprüche

1. Vorrichtung umfassend einen Abschleppanhänger (48) geeignet zum Lagern in einem Werkstattfahrzeug (10) in verstauter Position und zum Positionieren außerhalb des Fahrzeugs (10) in einem ausgefahrenen Zustand, **dadurch gekennzeichnet, dass** die Vorrichtung ferner einen schwenkbaren Arm (18) umfasst, der so ausgebildet ist, dass er sich beim Einsatz um sein Gelenk bewegt, so dass der Anhänger (48) außerhalb des Fahrzeugs (10) positioniert wird.

2. Vorrichtung nach Anspruch 1, wobei ein Ausrichtmittel (76, 80) vorgesehen ist, um eine Anhängekupplung (70) des Anhängers mit einer Abschleppvorrichtung (72) des Fahrzeugs auszurichten, wenn der Anhänger sich in seine ausgefahrene Position bewegt.

3. Vorrichtung nach Anspruch 2, wobei das Ausrichtmittel ein Ausrichtelement (76) am Anhänger und ein kooperierendes Element (82) am Fahrzeug umfasst, wobei beim Einsatz Ausrichtung durch Anordnen des Ausrichtelements (76) und des kooperierenden Elements (82) ineinander vor dem Anbringen der Anhängekupplung (70) an der Abschleppvorrichtung (72) erreicht wird.

4. Vorrichtung nach Anspruch 3, wobei das Ausrichtelement (76) ein ringartiges Element umfasst.

5. Vorrichtung nach Anspruch 3 oder Anspruch 4, wobei ein Haltemittel (84) vorgesehen ist, um den Anhänger in einer Position zu halten, in der das Ausrichtelement (76) am Anhänger und das kooperierende Element (82) darauf gerichtet sind, sich ineinander anzuordnen, wenn der Anhänger (48) aus dem Werkstattfahrzeug zu seiner ausgefahrenen Position bewegt wird.

6. Vorrichtung nach einem der vorhergehenden Ansprüche und ferner umfassend: Räder (90), die zur Bewegung zwischen eingeklappter und ausgeklappter Position am Anhänger (48) angebracht sind, wobei wenn die Räder (90) in der eingeklappten Position sind, der Anhänger (48) in seine verstaute Position bewegt werden kann, und wenn sie in der ausgeklappten Position sind, kann der Anhänger (48) vom Abschleppfahrzeug geschleppt werden.

7. Vorrichtung nach Anspruch 6, wobei die Räder (90) zur Schwenkbewegung zwischen der eingeklappten und ausgeklappten Position angebracht sind.

8. Vorrichtung nach Anspruch 7, wobei die Achsen der Schwenkbewegung der Räder (90) quer zur Schwenkachse des schwenkbaren Arms (18) sind.

9. Vorrichtung nach einem der Ansprüche 6-8, wobei die Räder (90) zwischen der eingeklappten und ausgeklappten Position beweglich sind, wenn der Anhänger (48) sich in einer Position zwischen der verstauten und ausgefahrenen Position befindet.

10. Vorrichtung nach einem der Ansprüche 6-9, wobei Betätigungsmittel (96) zum Einklappen und Ausklappen der Räder (90) vorgesehen sind.

11. Vorrichtung nach einem der Ansprüche 6-10, wobei ein separates Betätigungsmittel (96) für jedes Rad (90) vorgesehen ist.

12. Vorrichtung nach einem der Ansprüche 6-11, wobei die Räder (90) zur Eigenlenkung angebracht sind.

13. Vorrichtung nach einem der Ansprüche 6-12, wobei die Räder (90) zum Einklappen an Enden eines Trägers (52) angebracht sind, der an einer Schleppstange (50) befestigt ist, wobei die Schleppstange (50) sich in Fahrtrichtung des Anhängers erstreckt und der Träger (52) quer zur Schleppstange (50) ist.

14. Vorrichtung nach einem der vorhergehenden Ansprüche, wobei ein elektronisches Steuerungssystem zum Bewegen des Anhängers (48) zwischen seiner verstauten und ausgefahrenen Position vorgesehen ist.

15. Vorrichtung nach Anspruch 14, wobei das Steuerungssystem (48) eine mikroprozessorbasierte Steuerung ist und entweder von Hand oder automatisch betätigbar ist.

16. Vorrichtung nach einem der vorhergehenden Ansprüche, wobei mittig auf dem Anhänger eine Aufnahme vorgesehen ist, so dass es möglich ist, dass der Anhänger (48) beim Einsatz ein abzuschleppendes Motorrad trägt.

17. Verfahren zum Verstauen und Ausfahren eines Abschleppanhängers in und aus einem Werkstattfahrzeug, wobei das Verfahren die Schritte umfasst:
Bereitstellen eines schwenkbaren Arms (18) im Werkstattfahrzeug (10) zum Lagern des Anhängers (48) im Fahrzeug in einer verstauten Position; und
Bewegen des Arms (18) um sein Gelenk, so dass der Anhänger (48) außerhalb des Werkstattfahrzeugs positioniert wird, so dass es möglich ist, dass der Anhänger ausgefahren wird.

18. Verfahren nach Anspruch 17 und ferner umfassend den Schritt:
Bereitstellen eines Ausrichtelements (76) am Anhänger und eines kooperierenden Elements (82) am Werkstattfahrzeug beim Einsatz; und
Ausrichten des Werkstattfahrzeugs (10) und des Anhängers (48) durch Anordnen des Ausrichtelements (76) und kooperierenden Elements (82) ineinander vor dem Anbringen einer Anhängekupplung (70) des Anhängers an der Abschleppvorrichtung (72) des Fahrzeugs.

## Revendications

1. Appareil comprenant une remorque de dépannage (48) destinée à être supportée en position rangée dans un véhicule de réparation (10) et être disposée à l'extérieur du véhicule (10) à l'état déployé, **caractérisé en ce que** l'appareil comporte en outre un bras pivotant (18) destiné à se déplacer autour de son pivot pendant l'utilisation afin qu'il positionne la remorque (48) à l'extérieur du véhicule (10).

2. Appareil selon la revendication 1, dans lequel un dispositif d'alignement (76, 80) est disposé afin qu'il assure l'alignement d'un attelage (70) de la remorque sur un point d'attelage (72) du véhicule lorsque la remorque se déplace dans sa position déployée.

3. Appareil selon la revendication 2, dans lequel le dispositif d'alignement comprend un organe d'alignement (76) placé sur la remorque et un organe coopérant (82) placé sur le véhicule, l'alignement étant assuré pendant l'utilisation par disposition de l'organe d'alignement (76) et de l'organe coopérant (82) l'un dans l'autre avant la fixation de l'attelage de remorquage (70) au point d'attelage (72).

4. Appareil selon la revendication 3, dans lequel l'organe d'alignement (76) comprend un organe de forme annulaire.

5. Appareil selon la revendication 3 ou 4, dans lequel un dispositif de maintien (84) est destiné à maintenir la remorque dans une position dans laquelle l'organe d'alignement (76) de la remorque et l'organe coopérant (82) ont tendance à se placer l'un dans l'autre lorsque la remorque (48) est déplacée vers l'extérieur du véhicule de réparation vers sa position déployée.

6. Appareil selon l'une quelconque des revendications précédentes, comprenant en outre des roues (90) qui sont montées afin qu'elles se déplacent entre des positions pliée et dépliée sur la remorque (48), dans lequel, lorsque les roues (90) sont en position pliée, la remorque (48) peut être déplacée dans sa position rangée et, lorsqu'elles sont en position dépliée, la remorque (48) peut être remorquée par le véhicule de réparation.

7. Appareil selon la revendication 6, dans lequel les roues (90) sont montées afin qu'elles puissent se déplacer par pivotement entre les positions pliée et dépliée.

8. Appareil selon la revendication 7, dans lequel les axes de pivotement du mouvement des roues (90) sont transversaux à l'axe de pivotement du bras pivotant (18).

9. Appareil selon l'une quelconque des revendications 6 à 8, dans lequel les roues (90) sont mobiles entre les positions pliée et dépliée lorsque la remorque (48) est en position comprise entre les positions rangée et déployée.

10. Appareil selon l'une quelconque des revendications 6 à 9, dans lequel un dispositif à organe de manoeuvre (96) est destiné à plier et déplier les roues (90).

11. Appareil selon l'une quelconque des revendications 6 à 10, dans lequel un organe séparé de manoeuvre (96) est prévu pour chaque roue (90).

12. Appareil selon l'une quelconque des revendications 6 à 11, dans lequel les roues (90) sont montées afin qu'elles se dirigent automatiquement.

13. Appareil selon l'une quelconque des revendications 6 à 12, dans lequel les roues (90) sont montées afin qu'elles soient pliées sur les extrémités d'une poutre (52) fixée à une barre de remorquage (50), la barre de remorquage (50) s'étendant dans la direction de déplacement de la remorque et la poutre (52) étant transversale à la barre de remorquage (50).

14. Appareil selon l'une quelconque des revendications précédentes, dans lequel un système électronique de commande est incorporé afin qu'il déplace la remorque (48) entre ses positions rangée et déployée.

15. Appareil selon la revendication 14, dans lequel le système de commande (48) est un organe de commande à base de microprocesseur et peut être commandé par un dispositif manuel ou automatique.

16. Appareil selon l'une quelconque des revendications précédentes, dans lequel un plateau est disposé au centre de la remorque pour permettre à la remorque (48) de transporter une motocyclette à récupérer pendant son utilisation.

17. Procédé de rangement et de déploiement d'une remorque de dépannage introduite dans un véhicule de réparation et sortie d'un tel véhicule, le procédé comprenant les étapes suivantes :
la disposition d'un bras pivotant (18) dans le véhicule de réparation (10) afin qu'il supporte la remorque (48) à l'intérieur du véhicule en position rangée, et
le déplacement du bras (18) autour de son pivot afin qu'il positionne la remorque (48) à l'extérieur du véhicule de réparation en permettant le déploiement de la remorque.

18. Procédé selon la revendication 17, comprenant en outre les étapes suivantes :
la disposition d'un organe d'alignement (76) placé sur la remorque et d'un organe coopérant (82) placé sur le véhicule de réparation, pendant l'utilisation, et
l'alignement du véhicule de réparation (10) et de la remorque (48) par disposition de l'organe d'alignement (76) et de l'organe coopérant (82) l'un dans l'autre avant la fixation d'un attelage (70) de la remorque à un point d'attelage (72) du véhicule.
